(19)

Europäisches Patentamt
European Patent Office
Office européen des brevets

(11) **EP 4 450 341 A1**

(12) **EUROPEAN PATENT APPLICATION**
published in accordance with Art. 153(4) EPC

(43) Date of publication:
**23.10.2024 Bulletin 2024/43**

(21) Application number: **22908066.8**

(22) Date of filing: **19.07.2022**

(51) International Patent Classification (IPC):
**B60S 5/00** (2006.01)   **F16H 57/022** (2012.01)
**F16D 13/75** (2006.01)

(52) Cooperative Patent Classification (CPC):
**B60S 5/00; F16D 13/75; F16H 57/022**

(86) International application number:
**PCT/RU2022/000230**

(87) International publication number:
**WO 2023/113639 (22.06.2023 Gazette 2023/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2021 RU 2021136747**

(71) Applicant: **Yurchenko, Nikolay Nikolaevich Moscow, 109542 (RU)**

(72) Inventor: **Yurchenko, Nikolay Nikolaevich Moscow, 109542 (RU)**

(74) Representative: **Longoni, Alessandra**
**AL & Partners Srl**
**Via C. Colombo ang. Via Appiani**
**(Corte del Cotone)**
**20831 Seregno (MB) (IT)**

(54) **RELEASE BEARING ADJUSTMENT DEVICE**

(57)   The device relates to the adjustment of mechanisms for the transmission of rotational speeds, including automatic transmissions of vehicles. The device for adjusting the release bearings includes a large housing containing holes for screw connections in its upper part, while the side surface contains two opposed threaded holes for thrust screws; four small housings, made with the possibility of connecting to a large housing by means of a screw connection, while each small housing has its own thickness, depending on the year of manufacture of the clutch and the condition of the adjustable clutch; five gauge brackets, made with the possibility of connecting to a small housing through a screw connection, while each of the five gauge brackets corresponds to a certain specified tolerance on the clutch basket - 0,4; - 0,2; 0,0; + 0,2 or + 0.4. The technical result of the present invention is a prefabricated housing design, which, in combination with additional elements, provides several tools for adjusting the depth of the release bearings of double friction clutches - with all the required depths and applicable tolerances.

Fig. 1

## Description

## Technical field

The device relates to the adjustment of mechanisms for the transmission of rotational speeds, including automatic transmissions of vehicles.

## Background

A transmission housing is known to have a closed bottom and an open top, a transverse partition spaced inward from the specified open top, a set of main shaft bearings (US patent US 2308852, published 19.01.1943). The main shaft bearing means supported on the specified partition aligned with the specified first mentioned main shaft bearing, means, a plate adapted to close the open end of the specified housing, the main shaft bearing means on the specified plate, and the main shaft engages with all the specified main shaft support means for support, while the specified plate can move across the open end of the specified housing to combine the main shaft support means on the said plate with the said support means main shaft, when the said shaft is supported in support means on the closed end of the said housing and the said support means on the said partition, and means for fixing the said plate in an adjusted position across the open end of the said housing.

A mechanism is known that has a housing, a shaft and means of support with the possibility of rotating the said shaft relative to the housing, a means for adjusting bearing washers (US patent US3112965, published 03.12.1963). The tool is equipped with an external thread of the crown nut of engagement of the mentioned housing, stoppers for creating positive angular ratios between the specified nut and the housing, a sluice having an arc-shaped part of the body, the corresponding auxiliary arc of the circle, the tool also has radially directed sets of two internal and two external tabs, the angular distance between the shanks of one set being 2/3 of the angular distance between the ends of the other set.

A transmission housing is known, which includes a gearbox, clutch means and a differential with a crown gear and shaft (US patent US4289045, published 09/15/1981). The housing includes a variety of load-bearing support means, the first mentioned support bearings are located means and made with the possibility of receiving interchangeably the following components:

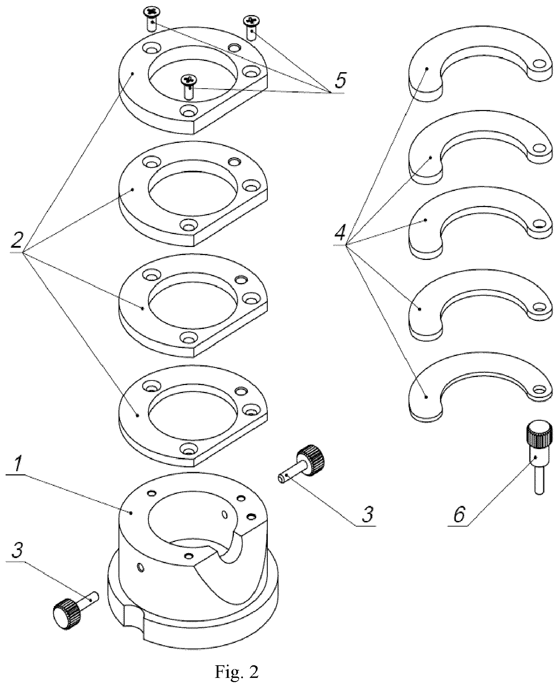

1. a bearing element for the input shaft of an automatic transmission, a means of countering the hydrokinetic torque converter (FIG. 2) and its sealing element;
2. the bearing element of the primary shaft of the gearbox with manual gearshift, together with the sealing element for it and the support means for the clutch release bearing assembly, the second mentioned bearing support means is located and configured to interchangeably support the following components:

3. one end of the intermediate gear means the connection of the specified automatic transmission with the specified crown gear of the differential;
4. the end gear of the secondary shaft of the said manual gear box connecting the said gearbox with the said crown gear of the differential, the third and fourth mentioned bearing supports, each of which is located and configured to receive bearings to support the rotation of the crown gear, while the said housing can be used for a manual gear box together with a mechanical clutch, as well as for an automatic transmission with a hydrokinetic drive. torque converter.

A gear reducer containing a casing closed with a lid, in the housing there is a gear wheel mounted in it for rotation around the first axis, a worm shaft having engagement with a worm gear and with a gear wheel and mounted in bearing assemblies for rotation around the second axis at an angle of 90 degrees to the first axis and having a part protruding from one the sides of the housing through a side hole in it, each bearing assembly containing a sleeve completely entering the housing and located in it so, that all radial and axial loads of the worm shaft are perceived by the body (European patent EP 0721549, published 14.01.1998).Each bearing assembly is made of sintered metal material and is held motionless in the casing due to the direct interaction of the lid with it, and the lid forms part of the casing.

A thrust washer assembly is known for a torque converter vehicle that includes the first component and the second component (US patent US6502994, published 07.01.2003).the first component contains the first annular body, which is made of a solid material based on polyimide resin integrated with carbon graphite to have high impact and self-lubricating characteristics. The specified first annular body has a first surface for friction engagement and a set of oil grooves on the specified first surface, which extend from the inner circle to the outer circle of the specified first surface. The specified first annular housing, in addition, has a second surface with a plurality of pins protruding in the axial direction. The specified second component contains a second annular housing having a mating part for mating with the specified first component, the specified mating part has a set of holes for receiving a set of pins protruding from the specified first component, the specified second component additionally has a gearing area, the shape of which is combined with the adjacent part of the torque converter.

A device of the axial clearance control unit in rolling bearings, which are shaft supports and installed in the holes of the detachable housing with the possibility of covering them with two embedded covers, one of which is in direct contact with the outer ring of the bearing, and the second through an intermediate element installed with the possibility of movement (Russian patent RU 2217630, published on 11/27/2003). The intermediate element is made in the form of a ring, the end of which, mated with the thrust collar of the embedded cover, has a helical surface, and the thrust collar of the embedded cover is made in turn on the end face with a surface similar to that on the end of the ring, while the embedded cover is installed in the hole of the housing with the possibility of turning around the longitudinal axis and fixing in this the ring is installed in the hole of the housing with the possibility of only longitudinal movement and restriction from turning.

A continuously variable transmission with a longitudinal axis is known, containing a set of speed controllers, each of which has an axis of rotation with an adjustable tilt, and each speed controller is located radially outward from the longitudinal axis (RU 2289045, published 10.12.2006). The driving disk capable of rotating annularly around the longitudinal axis, in contact with the first point on each of the speed controllers and having the first side facing the speed controllers and the second side facing outward from the speed controllers, the driven disk capable of rotating annularly around the longitudinal axis, in contact with the second point on each of the speed controllers, in in general, a cylindrical support element capable of rotating annularly around the longitudinal axis, in contact with the third point on each of the speed controllers, the disk of the pendulum, capable of rotating annularly around the longitudinal axis and adapted to apply a rotating force to the drive disk, at least two axial force generators located between the drive disk and the driven disk and the bearing disk, and each axial force generator is designed to apply an axial force component to the drive disk, thereby improving the contact of the drive disk and speed regulators, a set of central ramps containing a set of central ramps of the drive shaft and a set of central ramps of the screw, providing torque to at least one of at least two axial force generators, and a release mechanism located between the pendulum disc and the drive disc and adapted to disengage the drive disc with speed regulators.

An automobile gearbox with an input torque range from 410 to 560 Nm is known, containing a crankcase, a primary shaft with a gear ring mated to a gear wheel of an intermediate shaft drive with gears pressed on it, mated to gears of a secondary shaft with the possibility of changing gear ratios using inertial synchronizers (Russian patent RU 2520612, published on 27.06.2014). The cycle of periodic engagement of each gear in the form of the number of revolutions of the gear $n_1$ before the return of the mated gear teeth to their original position is determined by the ratio:

$$\text{at } \Delta z \neq 0,$$

where $n°$ is the integer number of revolutions of the gear closest to the gear ratio;
$k$ is the smallest integer multiplier for which there is

an integer;
$z_2$ - the number of teeth of the wheel;

- the modulus of the circumferential displacement of the initial gear teeth for the number of revolutions of the gear $n°$

$$\Delta z = z_2 - n° z_1;$$

$z_1$ is the number of gear teeth for accelerating transmission cycle $n_1 \geq 86$ revolutions of the secondary shaft gear.(Russian patent RU 2520612, published 27.06.2014).

A adjusting mechanism of the bearing pressure washers is known, which includes mounting crown gears (US patent US 9618083, published 11.04.2017). The gears are arranged coaxially with respect to the central axis and each of which includes a system with cylindrical teeth, two eccentric wheels with gears that engage with systems of cylindrical teeth of crown gears, eccentric axes that are inclined at an angle to the central axis, and a central shaft that is driven by a drive shaft on which are mounted eccentric wheels. The set of gear rings includes a central gear wheel that rotates, and two external adjacent gears that are rigidly fixed.

A car gearbox control drive is known, containing a gearshift lever, a ball bearing and a bearing sleeve (Russian patent RU 2683135, published on 03/26/2019). The bearing sleeve is equipped with an internal thread, and the gearshift lever at its base is equipped with an external thread mating with the thread of the bearing sleeve.

The closest to the claimed is a device for selecting the thickness of washers when adjusting the clutch of a car with an automatic transmission (patent of the Republic of Belarus BY 10584, published on 11/28/2014). The device is a cylindrical body with a two-stage through hole, and the diameter of the lower stage is equal to the outer diameter of the small release bearing, and the diameter of the upper stage is equal to the outer diameter of the shaft end on which the release bearings are mounted. On the upper end of the housing, from the side of the hole of a smaller diameter, one of three arc-shaped brackets having the following thicknesses: the thickness of the first bracket is equal to ¾ of the width of the groove on the shaft, the thickness of the second bracket is increased by 0.2 mm ¾ of the width of the groove, and the thickness of the third bracket is equal to a reduced by 0.2 mm 3/4 of the width of the groove. The depth of the upper stage in the device housing is equal to the difference between the landing depth of the large release bearing and the landing depth of the small release bearing. The total height of the device is equal to the landing depth of the large release bearing, taking into account the tolerance for this type of clutch.

The disadvantages of this device include limited applicability. The device can only be used for servicing DSG transmissions (Direct Shift Gearbox, DSG - gearbox with synchronized shifting) in cars before 2011, the inability to adjust used clutch clutches and incomplete coverage of the tolerances used today, set by the manufacturer. In addition, the previously patented device does not allow the clutch to be pressed to the required depth (grooves for the locking ring on the input shaft K2).

**Essence of the invention**

The objective of the claimed invention is to service all cars with DSG gearboxes, all years of manufacture and all designs. This device can be used to install and dismantle double friction clutch couplings to a given depth, taking into account all the tolerances set by the manufacturer.

The technical result of the present invention is a prefabricated housing design, which, in combination with additional elements, provides several tools for adjusting the depth of the release bearings of double friction clutches - with all the required depths and applicable tolerances.

The technical result is achieved due to the fact that the housing of the proposed device consists of several components having different thicknesses. The connection of the two housings selected for routine repair with screws gives the right height of the tool for adjusting the depth of the release bearings, the selection of adjusting washers, taking into account all tolerances in different designs and for all DSG 7 models with dry double clutches. The number of adjustment plates (five) corresponds to the number of tolerances used by the manufacturer today: -0,4; -0,2; 0,0; +0,2; +0,4. In the upper part of the housing (on the narrow side) there are two threaded holes opposite each other for thrust screws, which serve to accurately install the clutch couplings to a given depth.

**Brief description of the drawings**

The drawings of the application are presented in a form sufficient to understand the essence of the invention by specialists in this field of technology, and in no way limit the scope of protection of the invention. In the drawings, the same elements have the same reference numbers.

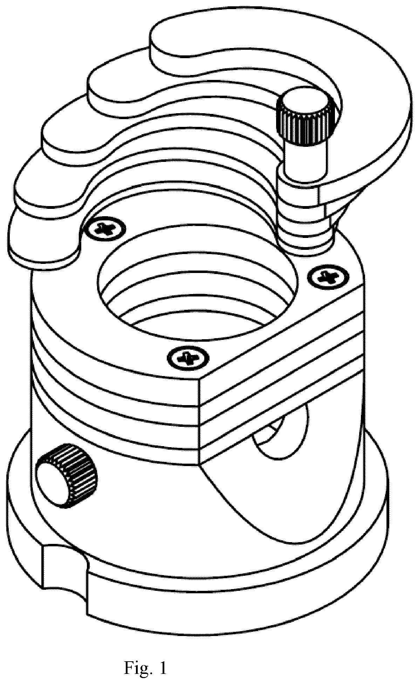

Fig. 1 shows a general view of the device;
Fig. 2 shows the view of the device in the disassembled state.

**Examples of the implementation of the invention**

The device consists of a large case 1, small cases (4 pcs.) 2, with the designation of the years of manufacture and the condition of the installed clutch couplings (new or used), adjusting brackets-calibers (5 pcs.) 4, and screws 3,5,6.

Clutch baskets of different heights and release bearings of different designs are used in clutches of different release years: some have a flat surface for the adjusting washer, and others have a surface in the form of a cone. As a result, several devices are required to adjust the depth of the release bearings. The proposed device has a double housing: a large housing 1, which has a constant height, and in total with one of the four small housings 2, differing in height, gives the required tool heights (four tools), each of which corresponds to the depth of the landing of the release bearings, year of manufacture, condition (new or used) and clutch designs.

A set of adjustment brackets-calibres (five) 4 corresponds to all the tolerances available today. + 0,4; + 0,2; 0,0; - 0,2 and - 0,4. At the same time, the year of manufacture and the condition of the double clutch (new or used) of the clutch that needs to be installed are marked on the small housings 2.

The device works as follows.

From the part of the large case 1 and one of the four small cases 2, on which the year of release of the clutch is written (before 2011 and after 2011) and the condition of the adjustable clutch (new or used), it is necessary to assemble and fasten one whole with screws. One of the five 4-gauge brackets corresponding to the specified tolerance on the clutch basket must be installed on the assembled housing using the screw 6 - 0,4; - 0,2; 0,0; + 0,2 or + 0.4 for the clutch disc selected for adjustment - K1 or K2. For the correct selection of the thickness of the adjusting washer for the selected release bearing, it is necessary to install one of the adjusting washers supplied with the clutch on the latter. Then put the assembled device on the input shaft of the automatic transmission DSG-7 and, with an average pressure on the release bearing, insert the bracket - caliber 4 into the slot for the locking half-ring on the input shaft K2. If the bracket-caliber 4 went into the groove for the locking ring easily and when the device moves up and down there is a gap and a free backlash is felt, then the washer is picked up incorrectly and you need to take a thicker washer from the kit. If, when installing the 4-gauge bracket into the groove of the locking ring, with an average pressure on the caliber, the bracket does not enter the groove, then it is necessary to take a thinner adjusting washer from the supplied kit. The selection of the adjusting washer is considered complete when the bracket-caliber 4 enters the groove of the locking ring with an average pressure on the caliber (5kg) with little effort and at the same time the device is stationary in axial movement along the shaft K2. Put the selected adjusting washer aside and perform the same operation with another clutch disc.

The use of this device allows you to get the following advantages:

full coverage in the maintenance of the entire range of DSG 7 transmissions and all existing modifications (0 AM, 0CW), including the use of this device in the installation and disassembly of double friction clutch clutches. As a result, the time for servicing the units is reduced and the accuracy of the work performed is increased, the functionality of car services is expanded, the convenience of working when replacing the clutch is increased and, as a result, costs are reduced.

**Claims**

1. A device for adjusting the release bearings includes

    a large housing containing holes for screw connections in its upper part, wherein
    a side surface contains two opposed threaded holes for thrust screws;
    four small housings, made with the possibility of connecting to a large housing by means of a screw connection, while
    each small housing has its own thickness, depending on the year of manufacture of the clutch and the condition of the adjustable clutch;
    five staples-calibers, made with the possibility of connecting to a small body through a screw connection, while
    each of the five gauge brackets corresponds to a certain specified tolerance on the clutch basket - 0,4; - 0,2; 0,0; + 0,2 or + 0.4.

Fig. 1

Fig. 2

## INTERNATIONAL SEARCH REPORT

| International application No. |
|---|
| PCT/RU 2022/000230 |

**A. CLASSIFICATION OF SUBJECT MATTER**

B60S 5/00 (2006.01); F16H 57/022 (2012.01); F16D 13/75 (2006.01)

According to International Patent Classification (IPC) or to both national classification and IPC

**B. FIELDS SEARCHED**

Minimum documentation searched (classification system followed by classification symbols)

B60S 5/00, F16H 1/00, 1/28, 1/32, 3/00-3/78, 57/00, 57/02, 57/021, 57/022, F16C 23/00, 23/06, 23/08, 23/10, 25/00, 25/02, 25/06, F16D 13/75

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| D, A | BY 10584 U (IURCHENKO NIKOLAI NIKOLAEVICH) 28.02.2015, the claims, figures 1-6 | 1 |
| A | RU 2728499 C1 (PUBLICHNOE AKTSIONERNOE OBSCHESTVO "TATNEFT" IMENI V.D.SHASHINA) 29.07.2020, the claims, the abstract, figures 1-3 | 1 |
| A | RU 2615236 C2 (TSF FRIDRIKHSKHAVEN AG) 04.04.2017, the claims, the abstract, figures 1-7 | 1 |
| A | JP 2019190470 A (SUZUKI MOTOR CORP) 31.10.2019, the claims, the abstract, figures 1-6 | 1 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 October 2022 (11.10.2022) | 03 November 2022 (03.11.2022) |

| Name and mailing address of the ISA/ | Authorized officer |
|---|---|
| RU | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2308852 A
- US 3112965 A
- US 4289045 A
- EP 0721549 A
- US 6502994 B
- RU 2217630

- RU 2289045
- RU 2520612
- US 9618083 B
- RU 2683135
- BY 10584